# FASCICULE DE BREVET EUROPEEN

(11) **EP 1 521 019 B1**
(45) Date de publication et mention de la délivrance du brevet: **06.07.2011**
(21) Numéro de dépôt: 04019799.8
(22) Date de dépôt: 20.08.2004
(51) Int. Cl.: F16J 15/08

(54) **Joint multicouche comprenant au moins une cale de surépaisseur**
Mehrlagendichtung mit mindestens einem Stutzelement
Multi-layered gasket with at least a thickening shim

(30) Priorité: 02.10.2003 FR 0350634
(43) Date de publication de la demande: 06.04.2005
(73) Titulaire: ElringKlinger AG, 72581 Dettingen (DE)
(72) Inventeur: Guerin, Damien Michel Louis, 70437 Stuttgart (DE); Golombek, Christoph, 69469 Weinheim (DE); Kebaili, Christian, Limoges (FR)
(74) Mandataire: Hoeger, Stellrecht & Partner Patentanwälte

(56) Documents cités:
- EP-A- 0 797 029
- EP-A- 1 113 199

## Description

La présente invention se rapporte à un joint multicouche comprenant au moins une cale de surépaisseur, et plus particulièrement à un joint de culasse métallique multicouche.

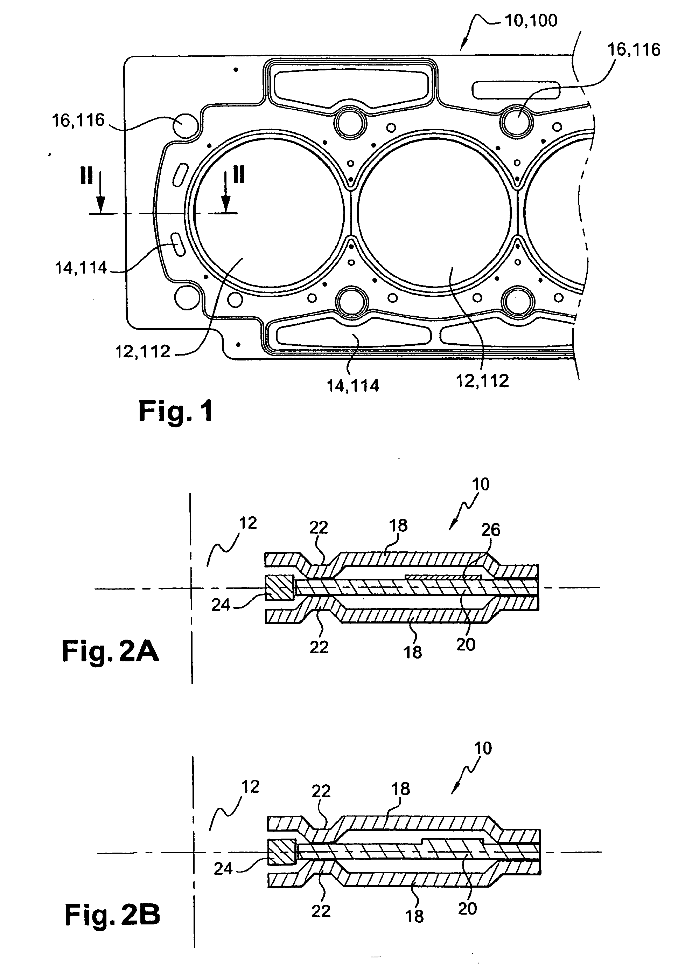

Un joint de culasse est utilisé pour assurer l'étanchéité entre un bloc moteur et une culasse. Comme illustré sur la figure 1, un joint de culasse 10 a généralement la forme du bloc moteur, notamment rectangulaire, et comprend une pluralité d'ouvertures, permettant d'assurer la continuité entre des cavités ou des conduits disposés d'une part dans le bloc moteur, et d'autre part dans la culasse. Ainsi, des premières ouvertures 12 sont prévues pour les chambres à combustion, des deuxièmes ouvertures 14 pour les conduits du ou des fluides de refroidissement et des troisièmes ouvertures 16 pour permettre le passage d'éléments de fixation de la culasse sur le bloc moteur, notamment des tiges filetées. Ainsi, le joint de culasse doit assurer une bonne étanchéité entre les conduits entre eux et entre les conduits et l'extérieur malgré les défauts géométriques des surfaces en contact du bloc moteur et de la culasse et les variations de température.

Selon un mode de réalisation répandu et illustré par les figures 2A et 2B, un joint de culasse 10 comprend plusieurs feuilles ou tôles empilées, notamment deux tôles extérieures 18 actives entre lesquelles est disposée une tôle intercalaire 20. Au moins l'une des tôles extérieures 18 comporte une nervure 22 autour des premières ouvertures 12, à proximité desdites ouvertures, orientée vers l'intérieur du joint, afin d'obtenir une zone déformable permettant de compenser les déformations du joint. Ainsi, lorsque des nervures 22 sont prévues sur les deux tôles extérieures 18, les parties en saillie desdites nervures sont disposées en vis à vis et orientées l'une vers l'autre ou en opposition.

Pour améliorer l'étanchéité, ledit joint 10 comprend une cale 24 appelée stoppeur, disposée en périphérie des premières ouvertures 12 prévues pour les chambres de combustion et bord à bord avec la tôle intercalaire 20. Ce stoppeur 24 a une épaisseur légèrement supérieure à la tôle intercalaire 20 permettant d'une part d'obtenir un effort de serrage plus élevé autour des chambres de combustion, et d'autre part, d'obtenir une pré-contrainte d'au moins une des tôles extérieures 18 réduisant l'amplitude de débattement et l'écrasement des nervures.

En fonction de l'agencement des éléments de serrage, le stoppeur peut avoir une épaisseur variable pour obtenir une répartition homogène de l'effort de serrage sur la périphérie des ouvertures 12 prévues pour les chambres de combustion.

La présence d'un stoppeur 24 dont l'épaisseur est toujours supérieure à la tôle intercalaire 20 provoque des contraintes mécaniques au niveau des tôles extérieures 18 en raison de l'arc-boutement desdites tôles extérieures au moment du serrage. D'autre part, il est nécessaire d'avoir une pression de serrage homogène sur l'ensemble de la surface du joint de culasse 10 pour obtenir une bonne étanchéité.

Aussi, pour résoudre ces problèmes, des surépaisseurs localisées sont prévues au niveau de la tôle intercalaire, dans la zone dite hors gaz c'est-à-dire à l'extérieur des nervures 22, permettant de réduire les contraintes et d'obtenir une pression de serrage homogène sur l'ensemble de la surface du joint.

Selon un premier mode de réalisation connu et illustré par la figure 2A, la surépaisseur est obtenue en rapportant sur la surface de la tôle intercalaire 20 un clinquant 26 ou une tôle mince, d'épaisseur inférieure ou égale à 0,1 mm.

Cette solution n'est pas satisfaisante car la mise en place du clinquant n'est pas aisée, ce dernier étant susceptible de se plier. Par ailleurs, il est nécessaire que le clinquant soit lié mécaniquement à la tôle intercalaire pour jouer pleinement son rôle. Or, la fixation d'un élément extrêmement mince est relativement complexe et coûteuse.

Selon un second mode de réalisation connu et illustré par la figure 2B, la surépaisseur est obtenue par matriçage de la tôle intercalaire 20 afin de lui procurer une épaisseur variable. Cette solution n'est également pas satisfaisante car le matriçage d'une tôle afin de lui donner des épaisseurs variables localisées est relativement complexe et coûteux à mettre en oeuvre. Par ailleurs, cette technique par matriçage ne permet pas d'obtenir des épaisseurs de dimensions précises contrairement au technique de laminage. Selon un troisième mode de réalisation, décrit dans le brevet européen n° EP-0797029, la surépaisseur est obtenue à l'aide d'une résine déposée par sérigraphie sur la tôle intercalaire. Cette solution est aussi relativement complexe et coûteuse à mettre en oeuvre.

Aussi, la présente invention vise à pallier les inconvénients de l'art antérieur en proposant un joint multicouche avec une tôle intercalaire à épaisseur variable localisée de conception simple dont la mise en oeuvre est aisée et relativement moins coûteuse.

A cet effet, l'invention a pour objet un joint de culasse avec au moins un orifice correspondant à une chambre de combustion, ledit joint comprenant un empilage d'au moins une tôle dite active comportant au moins une nervure ménagée autour dudit ou desdits orifice(s), et d'au moins une tôle intercalaire ainsi qu'une cale appelée stoppeur, disposée en périphérie dudit au moins un orifice dont l'épaisseur est supérieure à la tôle intercalaire, le joint comprenant au moins une cale dite de surépaisseur disposée dans le plan de la tôle intercalaire, au droit de la ou des tôle(s) active(s), à l'extérieur de la ou des nervures, ladite cale de surépaisseur ayant une épaisseur telle que ladite cale constitue une surépaisseur localisée par rapport à la tôle intercalaire, caractérisé en ce que la tôle intercalaire comprend au moins un évidement ou un logement susceptible de recevoir au moins une cale de surépaisseur. Ainsi, la cale de surépaisseur est disposée dans un logement ménagé dans la tôle intercalaire, les formes de la cale intercalaire coopérant avec celles du logement qui la reçoit. Cet agencement permet une meilleure immobilisation de la cale de surépaisseur.

De préférence, le logement est débouchant. Cette variante a pour avantage de simplifier le mode opératoire et d'obtenir une surépaisseur précise correspondant à l'épaisseur de la cale de surépaisseur obtenue par laminage.

L'invention propose également un procédé pour la réalisation d'une surépaisseur dans une tôle intercalaire d'un joint de culasse.

D'autres caractéristiques et avantages ressortiront de la description qui va suivre de l'invention, description donnée à titre d'exemple uniquement, en regard des dessins annexés sur lesquels:
- la figure 1 est une vue en élévation de dessus d'un joint de culasse,
- la figure 2A est une coupe selon la ligne II-II de la figure 1 d'un premier mode de réalisation selon l'art antérieur,
- la figure 2B est une coupe selon la ligne II-II de la figure 1 d'un second mode de réalisation selon l'art antérieur,
- la figure 3 est une coupe selon la ligne II-II de la figure 1 d'un premier mode de réalisation selon l'invention,
- la figure 4 est une coupe selon la ligne II-II de la figure 1 d'un second mode de réalisation selon l'invention,
- la figure 5 est une vue en perspective et en coupe du joint de la figure 4,
- la figure 6 est une vue en coupe illustrant un mode de réalisation d'un joint avec une cale de surépaisseur disposée en périphérie du joint, et
- la figure 7 est une vue en coupe illustrant une autre variante d'un mode de fixation d'une cale de surépaisseur disposée en périphérie du joint.

Sur la figure 1, on a représenté un joint de culasse 100.

Ce type de joint interposé entre un bloc moteur et une culasse comprend une pluralité d'ouvertures permettant d'assurer la continuité entre des cavités ou des conduits ménagés dans ledit bloc moteur et ladite culasse. Ainsi, le joint de culasse 100 doit assurer l'étanchéité entre les cavités ou conduits entre eux et avec l'extérieur.

Pour la suite de la description, les éléments communs avec les variantes de l'art antérieur portent les mêmes références augmentées de 100.

Ainsi, comme illustré sur les différentes figures, le joint de culasse 100 comprend des premières ouvertures 112 prévues pour les chambres à combustion, des deuxièmes ouvertures 114 prévues pour des conduits du ou des fluides de refroidissement et des troisièmes ouvertures 116 prévues pour permettre le passage d'éléments de fixation de la culasse sur le bloc moteur, notamment des tiges filetées.

Ce joint de culasse 100 comprend plusieurs feuilles ou tôles empilées, notamment deux tôles extérieures 118 actives entre lesquelles est disposée une tôle intercalaire 120. Au moins l'une des tôles extérieures 118 comporte une nervure 122 autour des premières ouvertures 112, à proximité desdites ouvertures, orientée vers l'intérieur du joint, afin d'obtenir une zone déformable permettant de compenser les déformations du joint. Ainsi, lorsque des nervures 122 sont prévues sur les deux tôles extérieures 118, les parties en saillie desdites nervures sont de préférence disposées en vis à vis et orientées l'une vers l'autre. Ainsi, la ou les nervures 122 délimitent deux zones, une première zone à l'intérieur de la ou des nervures et une seconde zone à l'extérieur de la ou des nervures 122 appelée zone hors gaz.

Pour améliorer l'étanchéité, ledit joint 110 comprend une cale 124 appelée stoppeur, d'épaisseur supérieure à la tôle intercalaire 120, disposée en périphérie des premières ouvertures 112 et bord à bord avec la tôle intercalaire 120.

Selon l'invention, le joint 110 comprend au moins une cale 130 dite de surépaisseur disposée dans le plan de la tôle intercalaire 120, au droit de la ou des tôles actives 118, à l'extérieur de la ou des nervures, ladite cale de surépaisseur ayant une épaisseur telle que ladite cale 130 constitue une surépaisseur localisée par rapport à la tôle intercalaire 120.

Par être disposée dans le plan de la tôle intercalaire 120, on entend qu'une partie de la cale de surépaisseur 130 est susceptible de venir en contact contre au moins une partie de la section de la tôle intercalaire 120, la section correspondant soit au bord périphérique de la tôle intercalaire, soit au bord d'un logement ou évidement ménagé dans la tôle intercalaire.

Par être disposée au droit de la ou des tôles actives 118, on entend qu'une partie de la cale de surépaisseur 130 est susceptible de venir en contact contre au moins une tôle active ou est disposée entre deux tôles actives.

La cale 130 de surépaisseur est disposée dans un logement ou un évidemment 128 ménagé dans la tôle intercalaire 120.

Avantageusement, les formes de la cale 130 de surépaisseur coopèrent avec celles du logement 128 qui la reçoit afin de limiter les mouvements relatifs dans le plan de la tôle intercalaire 120.

La cale de surépaisseur 130 est immobilisée en translation par les bords du logement 128 et a une épaisseur supérieure à celle d'un clinquant 26 de l'art antérieur facilitant sa mise en oeuvre. De manière générale, une opération d'usinage d'enlèvement de matière afin de réaliser un logement ou un évidement est relativement plus simple et moins coûteuse à réaliser qu'une opération de matriçage.

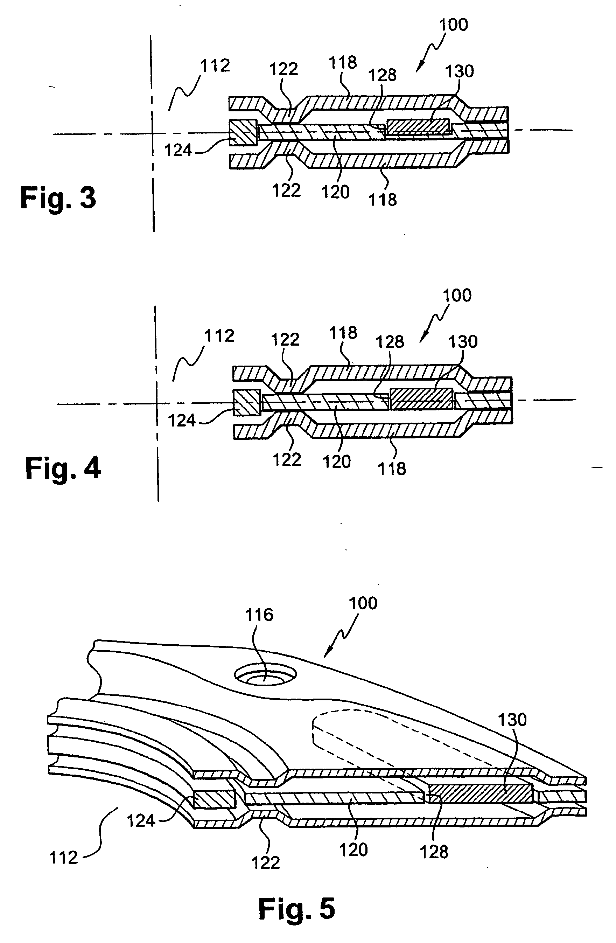

Selon les cas, le logement 128 peut être non débouchant tel qu'illustré sur la figure 3 ou débouchant tel qu'illustré sur la figure 4. Cette seconde variante a pour avantage de simplifier le mode opératoire et d'obtenir une surépaisseur précise correspondant à l'épaisseur de la cale 130 de surépaisseur obtenue par laminage.

La seconde variante est illustrée en perspective sur la figure 5.

Conformément à l'art antérieur, la surépaisseur générée par la cale 130 permet de réduire les contraintes mécaniques au niveau des tôles extérieures 118 et d'obtenir une pression de serrage homogène sur l'ensemble de la surface du joint.

Selon un mode de réalisation préféré, les logements 128 réalisés dans la tôle intercalaire 120 sont obtenus par poinçonnage, de préférence lors des découpes des ouvertures 112, 114 et 116. En complément, les cales 130 de surépaisseur peuvent être également obtenues par poinçonnage. Elles peuvent avoir des contours de différentes formes.

Contrairement à un clinquant qui doit être fixé à la tôle intercalaire par tout moyen approprié pour ne pas bouger, la cale 130 de surépaisseur est simplement immobilisée dans son logement 128 si bien qu'une fixation n'est plus nécessaire.

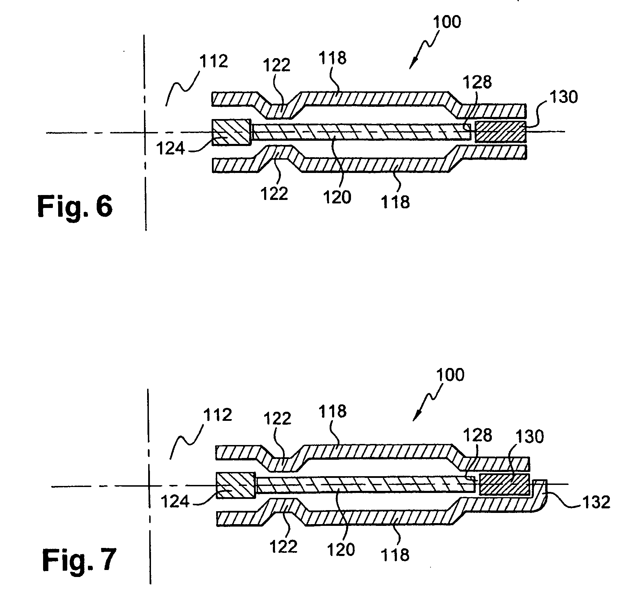

En variante, la cale 130 de surépaisseur peut être disposée au niveau des bords du joint, en périphérie de la cale intercalaire 120, comme illustré par les figures 6 et 7.

Dans ce cas, les bords de l'évidement 128 ménagé dans la tôle intercalaire 120 peuvent ne pas suffire pour immobiliser la cale 130 de surépaisseur.

Selon une première variante, la cale 130 peut être fixée à la tôle intercalaire 120 par tout moyen approprié, notamment par soudage, comme illustré sur la figure 6.

Selon une autre variante, la cale de surépaisseur 130 peut être fixée à une des tôles actives par tout moyen approprié, notamment par soudage.

Selon une autre variante, la cale 130 peut être simplement immobilisée au moins l'une des tôles extérieures 118 comprenant un bord 132 replié, comme illustré par la figure 7.

Les résultats les plus probants sont obtenus lorsque la cale de surépaisseur 130 est disposée en périphérie de la tôle intercalaire 120.

Ces résultats sont encore améliorés en combinant une cale de surépaisseur disposée en périphérie de la tôle intercalaire à des cales de surépaisseur disposées autour des passages de vis 116. Ainsi, selon l'invention, la cale de surépaisseur peut présenter un trou permettant le passage d'un vis. Cette solution a pour avantage d'obtenir l'immobilisation de la cale de surépaisseur entre les tôles actives et de ne pas lier de manière mécanique, par exemple par soudage, ladite cale de surépaisseur avec l'une des tôles actives ou la tôle intercalaire.

Bien entendu, l'invention n'est évidemment pas limitée au mode de réalisation représenté et décrit ci-dessus, mais couvre toutes les variantes, notamment en ce qui concerne les formes, les dimensions et les matériaux des différents éléments constituant le joint, selon les revendications.

Enfin, en variante, on pourrait envisager un stoppeur et une cale intercalaire d'un seul tenant, le stoppeur étant obtenu grâce à une surépaisseur au niveau de l'ouverture prévue pour les chambres de combustion, notamment par un pliage de la tôle intercalaire.

## Revendications

1. Joint de culasse avec au moins un orifice (112) correspondant à une chambre de combustion, ledit joint comprenant un empilage d'au moins une tôle dite active (118) comportant au moins une nervure (122) ménagée autour dudit ou desdits orifice(s), et d'au moins une tôle intercalaire (120) ainsi qu'une cale (124) appelée stoppeur, disposée en périphérie dudit au moins un orifice (112) dont l'épaisseur est supérieure à la tôle intercalaire (120), le joint comprenant au moins une cale (130) dite de surépaisseur disposée dans le plan de la tôle intercalaire (120), au droit de la ou des tôle(s) active(s), à l'extérieur de la ou des nervures (122), ladite cale de surépaisseur (130) ayant une épaisseur telle que ladite cale (130) constitue une surépaisseur localisée par rapport à la tôle intercalaire (120), **caractérisé en ce que** la tôle intercalaire (120) comprend au moins un évidement ou un logement (128) susceptible de recevoir au moins une cale de surépaisseur (130).

2. Joint de culasse selon la revendication 1, **caractérisé en ce que** les formes de la cale (130) de surépaisseur coopèrent avec celles de l'évidement (128) qui la reçoit.

3. Joint de culasse selon la revendication 1 ou 2, **caractérisé en ce que** l'évidement (128) est débouchant.

4. Joint de culasse selon l'une quelconque des revendications 1 à 3, **caractérisé en ce que** la cale (130) de surépaisseur est disposée en périphérie de la tôle intercalaire (120).

5. Joint de culasse selon la revendication 4, **caractérisé en ce qu'**au moins une tôle extérieure (118) comprend un bord 132 replié afin d'immobiliser la cale (130) de surépaisseur.

6. Procédé de réalisation d'une surépaisseur dans une tôle intercalaire incorporée dans un joint de culasse, ledit joint comprenant un empilage d'au moins une tôle dite active (118) comportant au moins une nervure (122) ménagée autour d'au moins un orifice (112) correspondant à une chambre de combustion, et d'au moins ladite tôle intercalaire (120) ainsi qu'une cale (124) appelée stoppeur, disposée en périphérie dudit au moins un orifice (112) dont l'épaisseur est supérieure à la tôle intercalaire (120), **caractérisé en ce qu'**il consiste à réaliser au moins un logement ou un évidement (128) dans la zone disposée à l'extérieur de la ou des nervures (122) et à disposer dans ledit évidement (128) une cale (130) d'épaisseur telle que ladite cale (130) constitue une surépaisseur localisée par rapport à la tôle intercalaire (120) permettant de réduire les contraintes mécaniques au niveau de ladite tôle active (118) découlant de la présence d'un stoppeur (124).

7. Procédé selon la revendication 6, **caractérisé en ce qu'**on réalise au moins un évidement (128) débouchant.

8. Procédé selon la revendication 6 ou 7, **caractérisé en ce que** ledit au moins un évidement (128) est obtenu par poinçonnage.

9. Procédé selon l'une quelconque des revendications 6 à 8, **caractérisé en ce qu'**au moins un évidement (128) est réalisé en périphérie de la tôle intercalaire (120).

10. Procédé selon la revendication 9, **caractérisé en ce qu'**on réalise un pliage (132) au niveau du bord périphérique d'au moins une tôle extérieure (118) afin d'immobiliser une cale (130) de surépaisseur disposée en périphérie de la tôle intercalaire (120).

## Claims

1. Cylinder head gasket comprising at least one opening (112) corresponding to a combustion chamber, said gasket comprising a pile of at least one active metal sheet (118) being provided with at least one bead (122) arranged around said opening or openings, at least one inter-layer metal sheet (120), and a shim (124) called a stopper, arranged at the periphery of said at least one opening (112) and thicker than the inter-layer metal sheet (120), said gasket comprising at least one extra thickness shim (130) arranged in the plane of the inter-layer metal sheet (120), in front of the active metal sheet or sheets, and on the outside of the bead or beads (122), said extra thickness shim (130) having such a thickness that said shim (130) forms a localized increase in thickness in comparison to the inter-layer metal sheet (120), **characterized in that** the inter-layer metal sheet (120) comprises at least one recess or nest (128) capable of receiving at least one extra thickness shim (130).

2. Cylinder head gasket as claimed in claim 1, **characterized in that** the shapes of the extra thickness shim (130) correspond to the shapes of the recess (128) which receives said extra thickness shim (130).

3. Cylinder head gasket as claimed in claim 1 or 2, **characterized in that** the recess (128) goes all the way through the inter-layer metal sheet (120).

4. Cylinder head gasket as claimed in any of claims 1 to 3, **characterized in that** the extra thickness shim (130) is arranged at the periphery of the inter-layer metal sheet (120).

5. Cylinder head gasket as claimed in claim 4, **characterized in that** at least one outside metal sheet (118) comprises a bent edge (132) in order to immobilize the extra thickness shim (130).

6. Method of making an increase in thickness in an inter-layer metal sheet integrated in a cylinder head gasket, said gasket comprising a pile of at least one active metal sheet (118) being provided with at least one bead (122) arranged around at least one opening (112) corresponding to a combustion chamber, at least the inter-layer metal sheet (120), and a shim (124) called a stopper, arranged at the periphery of said at least one opening (112) and thicker than the inter-layer metal sheet (120), **characterized in that** said method consists in providing at least one recess or nest (128) in the zone situated on the outside of the bead or beads (122), and in placing in said recess (128) a shim (130) having such a thickness that said shim (130) forms a localized increase in thickness in comparison to the inter-layer metal sheet (120) allowing a reduction of the mechanical stresses in the active metal sheet (118) resulting from the presence of a stopper (124).

7. Method as claimed in claim 6, **characterized in that** at least one recess (128) going all the way through the inter-layer metal sheet (120) is provided.

8. Method as claimed in claim 6 or 7, **characterized in that** said, at least one, recess (128) is obtained via a stamping process.

9. Method as claimed in any of claims 6 to 8, **characterized in that** at least one recess (128) is provided at the periphery of the inter-layer metal sheet (120).

10. Method as claimed in claim 9, **characterized in that** a bend (132) is provided in the peripheral edge of at least one outside metal sheet (118) in order to immobilize an extra thickness shim (130) arranged at the periphery of the inter-layer metal sheet (120).

## Patentansprüche

1. Zylinderkopfdichtung mit zumindest einer Öffnung (112), die mit einer Verbrennungskammer korrespondiert, wobei die Dichtung einen Stapel von zumindest einem so genannten aktiven Blech (118) mit zumindest einer Rippe (122), welche die Öffnung oder Öffnungen umgebend angeordnet ist, und von zumindest einem Zwischenblech (120) sowie einer Beilage (124), Stopper genannt, enthält, die am Umfang der zumindest einen Öffnung (112) angeordnet und deren Dicke größer als das Zwichenblech (120) ist, wobei die Dichtung zumindest eine Beilage (130) mit so genannter Überdicke enthält, die in der Ebene des Zwischenblechs (120), dem oder den aktiven Blech(en) benachbart, außerhalb der Rippe oder Rippen (122) angeordnet ist, wobei die Beilage (130) mit Überdicke eine derartige Dicke aufweist, dass die Beilage (130) eine bezüglich dem Zwischenblech (120) lokalisierte Überdicke bildet, **dadurch gekennzeichnet, dass** das Zwischenblech (120) zumindest eine Ausnehmung oder einen Sitz (128) aufweist für die Aufnahme zumindest einer Beilage (130) mit Überdicke.

2. Zylinderkopfdichtung nach Anspruch 1, **dadurch gekennzeichnet, dass** die Formen der Beilage (130) mit Überdicke mit denen der sie aufnehmenden Ausnehmung (128) zusammenwirken.

3. Zylinderkopfdichtung nach Anspruch 1 oder 2, **dadurch gekennzeichnet, dass** die Ausnehmung (128) ein Durchbruch ist.

4. Zylinderkopfdichtung nach einem der Ansprüche 1 bis 3, **dadurch gekennzeichnet, dass** die Beilage (130) mit Überdicke am Umfang des Zwischenblechs (120) angeordnet ist.

5. Zylinderkopfdichtung nach Anspruch 4, **dadurch gekennzeichnet, dass** zumindest ein äußeres Blech (118) einen umgebogenen Rand (132) aufweist, um die Beilage (130) mit Überdicke festzulegen.

6. Verfahren zur Herstellung einer Überdicke in einem Zwischenblech, das in eine Zylinderkopfdichtung eingebaut ist, wobei die Dichtung einen Stapel von zumindest einem so genannten aktiven Blech (118) mit zumindest einer Rippe (122), die zumindest eine Öffnung (112), die mit einer Verbrennungskammer korrespondiert, umgebend angeordnet ist, und von mindestens dem Zwischenblech (120) sowie eine Beilage (124), Stopper genannt, enthält, die am Umfang der zumindest einen Öffnung (112) angeordnet und deren Dicke größer als das Zwischenblech (120) ist, **dadurch gekennzeichnet, dass** es darin besteht, zumindest einen Sitz oder eine Ausnehmung (128) in dem Bereich zu realisieren, der außerhalb der Rippe oder Rippen (122) angeordnet ist, und in der Ausnehmung (128) eine Beilage (130) mit einer derartigen Dicke anzuordnen, dass die Beilage (130) eine bezüglich dem Zwischenblech (120) lokalisierte Überdicke bildet, welche es erlaubt, die mechanischen Beanspruchungen im Bereich des aktiven Blechs (118), die sich durch das Vorhandensein eines Stoppers (124) ergeben, zu reduzieren.

7. Verfahren nach Anspruch 6, **dadurch gekennzeichnet, dass** zumindest eine durchgehende Ausnehmung (128) realisiert wird.

8. Verfahren nach Anspruch 6 oder 7, **dadurch gekennzeichnet, dass** die mindestens eine Ausnehmung (128) durch Stanzen erhalten wird.

9. Verfahren nach einem der Ansprüche 6 bis 8, **dadurch gekennzeichnet, dass** zumindest eine Ausnehmung (128) am Umfang des Zwischenblechs (120) realisiert wird.

10. Verfahren nach Anspruch 9, **dadurch gekennzeichnet, dass** eine Umbiegung (132) im Bereich des umlaufenden Randes zumindest eines äußeren Blechs (118) realisiert wird, um eine Beilage (130) mit Überdicke, die am Umfang des Zwischenblechs (120) angeordnet ist, festzulegen.
